# EUROPEAN PATENT APPLICATION

(11) **EP 2 506 155 A1**
(43) Date of publication of application: **03.10.2012**
(21) Application number: 11160448.4
(22) Date of filing: 30.03.2011
(51) Int. Cl.: G06F 17/24

(54) **Auto-fill functionality within engineering software for automation systems**

(71) Applicant: SIEMENS AKTIENGESELLSCHAFT, 80333 München (DE)
(72) Inventor: Bluhm, Anja, 90537, Feucht (DE); Dong, Yi, 90491 Nürnberg (DE)

(57) **Abstract**

A method for automatically filling, in a matrix (10) comprising data concerned with automation functionality, a user-selected area (14) depending on data comprised within said user-selected area (14), wherein said matrix (10) consists of at least one row and at least one column, is proposed, wherein the method comprises the steps of identifying at least one source-object (12) in said user-selected area (14), identifying at least one data-type associated in said matrix (10) with either a row or a column containing said source-object (12), identifying one auto-fill functionality for each identified data-type, applying said auto-fill functionality to each column or row of said user-selected area (14)depending on said source-object (12).

## Description

### FIELD OF THE INVENTION

The present invention relates in general to a method, a system and a device for automatically filling a matrix or parts of a matrix comprising data concerned with automation functionality. Said automatically filling is hereinafter briefly termed auto-fill. Said auto-fill concerns a user-selected area within said matrix and said auto-fill depends on data comprised within said selected area.

### BACKGROUND OF THE INVENTION

Table editors, wherein said table is a matrix comprising at least one column and at least one row, are common and well-known means for handling mass data. Each row and each column can consist of a multitude of cells and in a single-row matrix, each cell constitutes a column of said matrix or vice-versa. Besides the possibility for manually editing individual cells, that is one entry in said table or matrix, table editors offer more convenient editing functions such as a function for automatically filling (auto-fill) a selected area. Auto-fill normally allows for rapid filling of adjacent cells (the selected area or user-selected area) based on at least the contents of a single cell within said area.

Auto-fill has been known in the art for quite some time from so called spreadsheet programs such as the spreadsheet program known under the Trade Mark "Excel" and offered by Microsoft Corp., US.

Known auto-fill functionality gets started by selecting at least one source object, that is by selecting at least one source cell and therewith the at least one source object comprised in said at least one source cell, followed by normally a mouse-action which involves extending a border which previously identified the source cell or source cells to a larger area which hereinafter is termed the selected area or user-selected area, and to which the auto-fill functionality is applied by filling the selected area with data based on the data comprised in the source cell or source cells. Known auto-fill functionality for spreadsheet programs involves incrementing a numerical value comprised in a source cell and filling the selected area with the relevant consecutive data. Known auto-fill functionality for spreadsheet programs is also able to identify a data-type of data comprised in said source-cell(s), and based thereon, auto-fill allows for automatically filling the selected area with consecutive weekdays, months, etc, whenever it is identified, that the contents of the source-cell is a name of a weekday or a name of a months.

In recent years, automation systems for controlling and/or observing technical processes, such as production processes, have become increasingly more capable and thus increasingly more complex. The complexity leads to the need for controlling or observing increasingly more data which calls for efficient means for handling and providing said data. Highly sophisticated engineering systems, such as the programming and engineering system offered by the applicant of the present application under the Trade Mark "Step" have become the state-of-the-art means for programming automation software, which during operation maintain said control and/or observation of the relevant technical process.

Engineering systems rely on displaying portions of the relevant data in tables, that is matrices with rows and columns, i.e. at least one row or at least one column, and a number of cells as defined by the relevant number of rows and columns. A table or a matrix has been proven to be a convenient way for displaying data for or used in automation systems to the user, that is a programmer or a person responsible for the relevant technical process. Thus, engineering software as basis for the engineering system, when the engineering software is run on a computer, operates on tables, and the data organized therein.

Unlike tables in spreadsheet programs the data in or for an automation system, which is conveniently displayed in matrix format, normally does not involve interconnections between the contents of various cells, as is common for spreadsheet programs, wherein a simple example for such an interconnection is that a contents of a first cell is added to the contents of a second cell and thereafter stored in a third cell. For this, the said third cell would normally comprise an expression describing a function for adding the contents of the referenced cells and also the reference to said first and second cell. For an automation system, the contents of a table are rather e.g. a number of variables used in the automation system, wherein attributes for said variables are shown adjacent a specific identifier, e.g. a variable name. Based on this example, it is assume hereinafter that one standard table for an automation system comprises of several rows, each row provided for a single variable, wherein said table has a number of columns, and wherein each column represents an attribute for the relevant variable, e.g. a name for the variable in a first column, a data-type for the variable in a second column, an address where the variable is stored in a memory of the automation system in a third column, and so on.

Although data for automation system may be displayed in matrix format, there are thus many differences between a table used by an engineering system on the one hand and a table used as a basis for spreadsheet data on the other hand. Still it would be desirous to have an auto-fill functionality for engineering systems which might provide for similar results as is know from spreadsheet programs, that is that the engineering system provides for some sort of functionality for automatically and meaningful, that is meaningful in the context of an automation system, filling a user selected area based on data comprised in said area.

Therefore there is a need for a method and a system capable of significantly aiding a user of an engineering system provided for developing, revising, maintaining and debugging automation software for automation systems such as mentioned above.

### SUMMARY OF THE INVENTION

It is not known that table editors or the like used in engineering software for automation system already offer an auto-fill functionality or that it has yet been considered to look into the feasibility of having an auto-fill functionality for automation systems.

One aspect of the present invention thus is the transfer of auto-fill functionality from spreadsheet programs to engineering software for automation systems.

Another aspect of the present invention is how the auto-fill functionality is performed when engineering software for automation systems is concerned. To this end, the invention suggests that the auto-fill is based on a data-type of a row or a column containing the relevant source-object. This is in contrast to what auto-fill for spreadsheet programs is based on, where the data-type of the source-object is looked into. The filling relates to a matrix comprising data concerned with automation functionality and within said matrix to a user-selected area as part of said matrix. The matrix consists of at least one row and at least two columns or at least two rows and at least one column. Often the matrix comprises multiple rows and multiple columns. The user-selected area comprises at least two cells and thus constitutes a submatrix within said matrix comprising at least one row and at least two columns or at least two rows and at least one column. In order to allow and to perform the auto-fill, the method comprises the steps of identifying at least one source-object in said selected area, identifying at least one data-type associated in said matrix with either a row or a column containing said source-object, identifying one auto-fill functionality for each identified data type, applying said auto-fill functionality to each column or row of said selected area depending on said source-object.

The user-selected area is the part of the table or matrix, to which the auto-fill functionality is applied. The matrix as a whole comprises data concerned with automation functionality. One example for data concerned with automation functionality is a set of variables used in a control program for controlling a technical process. Said variables may conveniently be displayed in table format and the layout presented to the user, that is e.g. a programmer, is a matrix comprising rows and columns. One way for presenting said variables is that each variable is shown in one row of said table, and that attributes defined for the relevant variable, e.g. name, data-type, address, etc., are shown in consecutive cells of the relevant row, i.e. the columns of the table. When auto-fill is desired, the user selects an area (user-selected area) that he or she intends for being automatically filled. Said selection can be performed by means of a keyboard or a pointing device, such as a so-called mouse. The user-selected area can for example consist of several adjacent cells in one or more columns of the table.

As far as the steps of the method are concerned, as defined above, the approach suggests that initially one source-object within the user-selected area is identified. Often the source-object is the data comprised in an initial cell or a number of initial cells from which the selection of the user-selected area starts. In a subsequent step at least one data-type associated in said matrix with either a row or a column containing said source-object is identified. When the source object is the content of a single cell of the matrix, only one data-type requires to be identified and when it is assumed that the source-object contains an address where the relevant variable is to be stored in a memory of an automation device, the relevant data-type is a data-type capable of storing address-data. Based on the relevant data-type or data-types, the latter when the source-object is data comprised in multiple cells, one auto-fill functionality for each data-type is identified, e.g. an auto-fill functionality for incrementing address-data. The identified auto-fill functionality or auto-fill functionalities, the latter when the source-object is data comprised in multiple cells, is or are then applied to each column or row of said selected area depending on the source-object or source-objects. The dependency on the source-object or source-objects is in that e.g. in case of the example above, the address-value from which the auto-fill starts is the address-value comprised in the source-object.

Another aspect of the present invention is to identify the possibility for automatically filling a selected area and notifying the user thereof. According to this aspect of the invention, a method for automatically filling a user-selected area in a matrix comprising data concerned with automation functionality as described above comprises the steps of identifying content comprised in said selected area, analysing said identified content, and displaying a visual indicator, advising whether or not said selected area allows an application of said auto-fill functionality. Contrary to spreadsheet-programs, where auto-fill is always possible, e.g. by emptying the user-selected area on the basis of an empty source-object, auto-fill in automation technology-related data is not always possible, at least not always feasible. To this end, according to this aspect of the present invention it is suggested, that content comprised in the relevant selected area is identified and subsequently analysed. Identifying content can refer to either the relevant user-selected area or to at least one source-object within the user-selected area, wherein the identified content then is the contents of the user-selected area or the contents of the at least one source object. Analysing said identified content can comprise the step of ensuring that e.g. the at least one source object is not empty. Analysing said identified content can alternatively comprise the step of ascertaining that the user-selected area does not extend to portions of the matrix where auto-filling would overwrite data required for data outwith the user-selected area but adjacent thereto. Further examples for analysing said identified content are also encompassed by this aspect of the invention, and the aforementioned examples are only referred to for allowing a better and more thorough understanding of the invention and its various aspects. The method according to this aspect of the present invention finally comprises a step for displaying a visual indicator, advising whether or not the relevant user-selected area allows an application of said auto-fill functionality or not. Based upon said visual indicator the user can decide to select a different source-object or a different user-selected area or can consider if errors or data-mismatch in the matrix leads to auto-fill not being available, wherein, in the latter instance, the auto-fill functionality and its automatically displayed visual indicator also aids maintaining consistency of the data comprised in the table or matrix.

Further aspects of the invention will become apparent from the dependant claims and the subsequent description.

When, in the step of identifying a data-type, it is ascertained that the data-type on which the auto-fill is to be based is an address, the auto-fill functionality for an address involves the steps of identifying a start-address from said source-object, incrementing or decrementing said start address on the basis of a pre-defined or pre-definable step-rate for auto-filling the relevant row or column respectively in said selected area, in which the start-address is located, and observing syntax-restrictions defined for expressing an address as applicable for the relevant automation functionality. According to this aspect of the invention, addresses are not only decremented or incremented as would e.g. apply for auto-fill in a spreadsheet program based on integral numerical values and are rather decremented or incremented according to what syntax-restrictions for expressing address-values require in the relevant automation-environment. For example, in the "Step" engineering system, referred to above, addresses for bit-variables are normally expressed in a two-part form, wherein both the first and the second part is an integral number and wherein at least for the second part only numbers in the range between zero ("0") and seven ("7") are allowed (according to eight bits in a byte). This is an example for a syntax-restriction in that no address value for bit-variables, wherein the numerical value of the second part is greater than seven is allowed. The step of observing syntax-restrictions then accounts for an address following an address with a trailing seven ("7") being incremented in the first part, wherein the second part is re-set to zero.

When the step-rate applied for incrementing or decrementing said start-address automatically accounts for data comprised in said matrix and defining memory space requirements associated with data that is to be stored under the relevant addresses, the auto-fill functionality automatically accounts for differing memory-space requirements of variables in adjacent cells in the table or matrix and still allows for automatically filling the table or matrix with the relevant starting-address in the memory of the relevant automation device. In an exemplary situation wherein the table or matrix comprises in a first row a variable requiring a data-type according to the byte-format, in a second row a variable requiring a data-type according to the word-format, in a third row a variable requiring a data-type according to the real-format, and in a forth row a variable requiring a data-type according to the boolean-format, the auto-fill functionality will, when automatically accounting for data comprised in the matrix and defining memory space requirements associated with data that is to be stored under the relevant addresses, realise that the byte-format requires one byte of memory space, that the word-format requires two bytes of memory space, that the real-format requires six bytes of memory space, and that the boolean-format requires one single bit of memory space. When applying the auto-fill to a user-selected area comprising the cells provided for address-data in all the aforementioned four rows, the method would apply an increment or decrement of one ("1") for the transition from the first row to the second row (or from the second row to the first row), an increment or decrement of two ("2") for the transition from the second row to the third row, an increment or decrement of six ("6") for the transition from the third row to the forth row, and so on. Here, it has to be appreciated, that the auto-fill accounts for data outwith the selected area, namely data defining the data-type of the relevant variables encompassed by the user-selected area, which is unknown from auto-fill as provided in spreadsheet programs.

In an alternative embodiment it is provided that, when in the step of identifying a data-type it is ascertained that the data-type is a name, the auto-fill functionality for a name involves the steps of identifying a start-name from said source-object, applying an incremented or decremented prefix or suffix to said start-name for auto-filling the relevant row or column respectively in said selected area, in which the start-name is located. This aspect of the present invention allows for automatically providing unique variable-names. When in an exemplary situation it is assumed that one variable is named "motor", it is readily understandable, that in an automation environment one must not have more than one variable under the same name, since else e.g. a compiler would not be able to resolve the ambiguity resulting from multiple variables with identical names. To this end, this aspect of the invention provides that a start-name is identified from the source-object and that during auto-fill unique variable-names are created by e.g. suffixing said start-name, when the same is automatically filled into adjacent cells of the user-selected area. When the user-selected area comprises more than two rows or columns one single suffix will not suffice and accordingly it is provided that the suffix gets incremented or decremented according to what is required on the basis of the dimension of the user-selected area. One example of an applicable suffix is a two-character text in the from "_1", and applying this suffix to the variable name mentioned above as an example would create the value "motor_1" for a cell adjacent the source-object, when auto-fill is applied. When the uses-selected area comprised more than two rows or columns, the suffix gets e.g. incremented, resulting in suffixes in the form "_1", "_2", and so on, and finally resulting in cells adjacent the source-object and consecutive cells be filled with "motor1_1", "motor1_2", and so on. Thus it is ensured, that the auto-fill cannot create ambiguous variable-names. Furthermore, when a variable-name is found to comprise a number already, the method, in a preferred embodiment, provides for the incrementation or decrementation starting from this number, so that no additional suffix or prefix is required for creating unique identifiers. Furthermore, when it comes to applying a prefix or a suffix said application can be based on a user's choice on a case-by-case basis or predefined settings.

In a further and alternative embodiment it is provided that, when the user-elected area comprises empty rows (or columns), the method for automatically filling said user-selected area further comprises the steps of identifying a data-type for data in the columns (or rows) of said empty rows (or columns), identifying a start-value for each of said column (or row) and extending the auto-filling to cells outwith the selected area on the basis of said identified data-type and said identified start-value. This embodiment of the invention is particularly useful, when it comes to defining multiple variables with similar of identical attributes in the table or matrix. When for example the user-selected area encompasses the area provided for defining the relevant variable's addresses, and the dimension of the user-selected area provides for more addresses to be automatically created in empty rows or columns than the number of variables currently comprised in the matrix or table, the auto-fill functionality will assume that the user wishes to create as many new variables in empty rows or columns as the dimension of the user-selected area accounts for. The new variables created during auto-fill with its attributes are based on data comprised in the relevant row or column in which the source-object or source-objects is or are located. This functionality significantly eases the user from repetitive and error-prone typing tasks when it comes to creating multiple variables with similar or identical layout, that is a significant similarity in the relevant attributes or identical attributes.

The method according to the invention and its various embodiments and alternatives is normally implemented in software. To this end the invention also is a computer program with a computer readable program code for implementing the method as described herein and/or below. Furthermore, the invention also is a computer program product, such as a storage medium, with a computer readable program code for implementing said method and/or embodiments when the program code is run on a computer.

Further aspects, features and advantages of the present invention will become apparent from the drawings and detailed description of the following preferred embodiments.

### BRIEF DESCRIPTION OF THE DRAWINGS

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- FIG 1: shows a state-of-the-art auto-fill functionality;
- FIG 2, FIG 3 and FIG 4: show an aspect of the present invention according to which an availability of the auto-fill functionality as proposed here is identified for the user by means of an visual indicator;
- FIG 5 and FIG 6: show an exemplary situation for auto-fill in the context of engineering software for automation systems in that the auto-fill functionality automatically creates address-data;
- FIG 7 and FIG 8: show another exemplary situation for auto-fill in the context of engineering software for automation systems in that the auto-fill functionality automatically creates data for check-boxes while observing and replicating the pattern defined by the status of the check-boxes on which the auto-fill is based;
- FIG 9 and FIG 10: show a further exemplary situation for auto-fill in the context of engineering software for automation systems in that the auto-fill functionality automatically creates unique variable-names while further data of the thus-created new variables is derived form data outwith the area selected for autofill and wherein the new variables are inserted into the matrix for maintaining previous variable-data;
- FIG 11: shows a still further exemplary situation for auto-fill in the context of engineering software for automation systems in that the auto-fill functionality observes "boundaries" between variables, that is in the shown situation between a structured variable and a simple variable, resulting in the auto-fill being applied to the structured variable only while the adjacent simple variable is moved down in the table on account of inserted data;
- FIG 12: shows another exemplary situation for auto-fill in the context of engineering software for automation systems in that the auto-fill functionality automatically duplicates a structured variable in that the name of the structured variable is suffixed for creating unique variable-names while the names of variable inside the relevant structures can be maintained unchanged;
- FIG 13: is a simplified flow-chart illustration an algorithm for implementing the proposed auto-fill functionality and
- FIG 14: is a simplified block-diagram shown an automation system executing, during operation, an automation software programmed, maintained or revised by means of an engineering-system, wherein the engineering-system can comprise the proposed auto-fill functionality.

### DETAILED DESCRIPTION OF THE PREFERRED EMBODIMENT

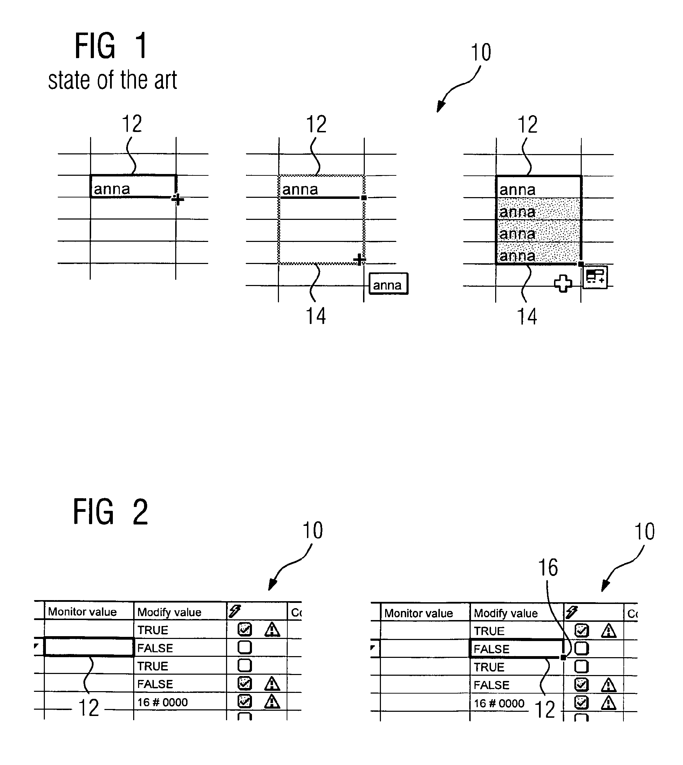

Table-editors are common for handling mass-data. Besides the manual input of data into individual cells they also offer more convenient editing functions which allows for rapid filling of adjacent cells based on a selection that is a source object on which an automatic filling function is based and a user-selected area to which automatic filling function is applied. For illustration purposes, FIG 1 shows three versions of a table or matrix, hereinafter termed as matrix 10, wherein - from left to right - an auto-fill functionality as is known in the art from so-called spreadsheet programs, is displayed. In the left-hand side of FIG 1 the matrix 10 comprises a single non-empty cell. This cell is selected as is shown by the border surrounding the cell and the cell or its contents is therefore the source-object 12 for the auto-fill functionality. In the center part of FIG 1 the user has extended the border around the source-object 12 by enlarging this border to encompass or enclose at least one further cell neighboring the source-object 12 and one or more subsequent adjacent cells. The area marked by the enlarged border is the user-selected area 14 to which the auto-fill functionality is to be applied. In the right-hand side of FIG 1 the auto-fill functionality has been applied and the user-selected area 14 has been filled with data on the basis of the source-object 12.

FIG 2 shows a first aspect of the present invention, according to which a method for automatically filling, in a matrix 10 comprising data concerned with automation functionality, a user-selected 14 area within said matrix 10 depending on data comprised within said user-selected area 14, wherein the method involves the steps of identifying content comprised in the relevant source-object 12 and/or the user-selected area 14, analysing said identified content, and displaying a visual indicator 16, advising whether or not the relevant source-object 12 and/or the user-selected area 14 allows an application of an auto-fill functionality. In the left-hand side of FIG 2 the source-object 12 is an empty source-object comprising no data. Automatically filling the matrix 10 with empty cells is not feasible in the field of automation technology. In the right-hand side of FIG 2 the source-object 12 comprises data and auto-fill could be based on this data, for example by filling adjacent cells with a copy of the contents of the source-object 12. Accordingly, wherever auto-fill is allowed or possible, a visual indicator 16 is displayed. On account of auto-fill not being possible in the exemplary situation show on the left-hand side if FIG 2, the visual indicator 16 is not shown there.

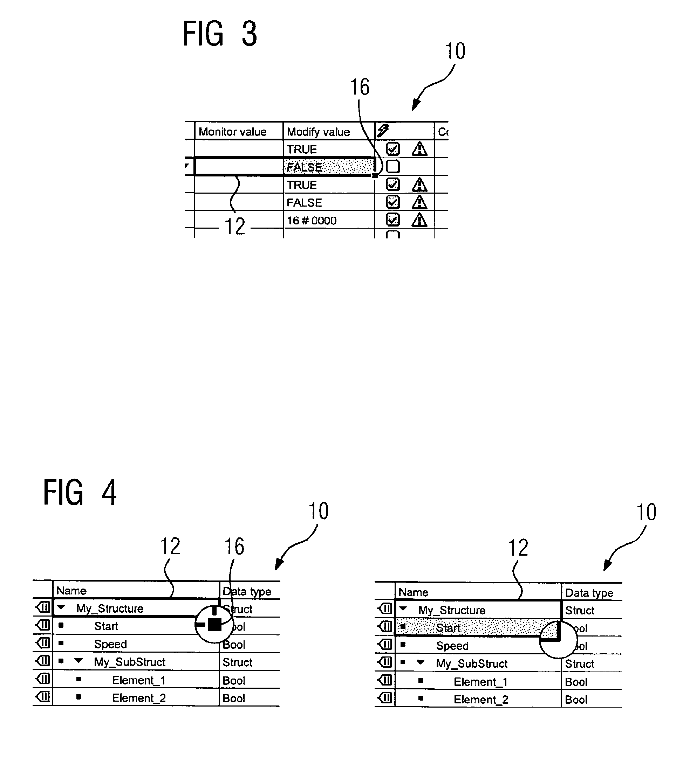

FIG 3 is a situation similar to what is shown in FIG 2 and illustrates that the source-object 12 can comprise more than one cell in the matrix 10. Effectively, the source-object 12 can comprise as many adjacent cells as the user wishes and the source-object 12 is defined by the user by selecting an initial cell and extending a border around the initial cell to encompass or enclose as many cells as the user wished to define as the source-object 12 for the subsequent auto-fill functionality. In the situation shown in FIG 3 the visual indicator 16 is displayed on account of the source-object 12 not being empty, that is at least one cell in the source-object 12 not being empty.

Moreover, in a supplemental or alternative embodiment individual rows or columns or individual cells of the matrix 10 can be marked as "auto-fill allowed" or "auto-fill not allowed". Whenever the source-object 12 or the user-selected area 14 comprises cells, rows or columns thus marked, auto-fill is consequently not available and the visual indicator 16 will not show. Examples for rows or columns where a mark for "auto-fill not allowed" is sensible are rows or columns containing system data. In this regard, the empty cell on the left-hand side of the illustration in FIG 2 can be perceived as being empty on account of user-input not allowed in the relevant column. Consequently, the column can be marked as "auto-fill not allowed", this being identified for the user e.g. by means of a specific colour as background for the column.

FIG 4 shows a situation where auto-fill is possible in the situation shown on the left-hand side (visual indicator 16 shown), whereas auto-fill is not possible or at least not permitted in the situation shown on the right-hand side. When auto-fill is applied on the left-hand side, the variable name shown as "My_Structure" will get copied. The situation on the right-hand side does not provide a meaningful basis for auto-fill with the contents of the source-object 12 that is a partial selection within a larger structure.

As is shown in FIG 2, FIG 3 and FIG 4 the auto-fill proposed here is context-sensitive, which is in contrast to the auto-fill functionality provided in spreadsheet programs where auto-fill is always possible and does not account for context issues.

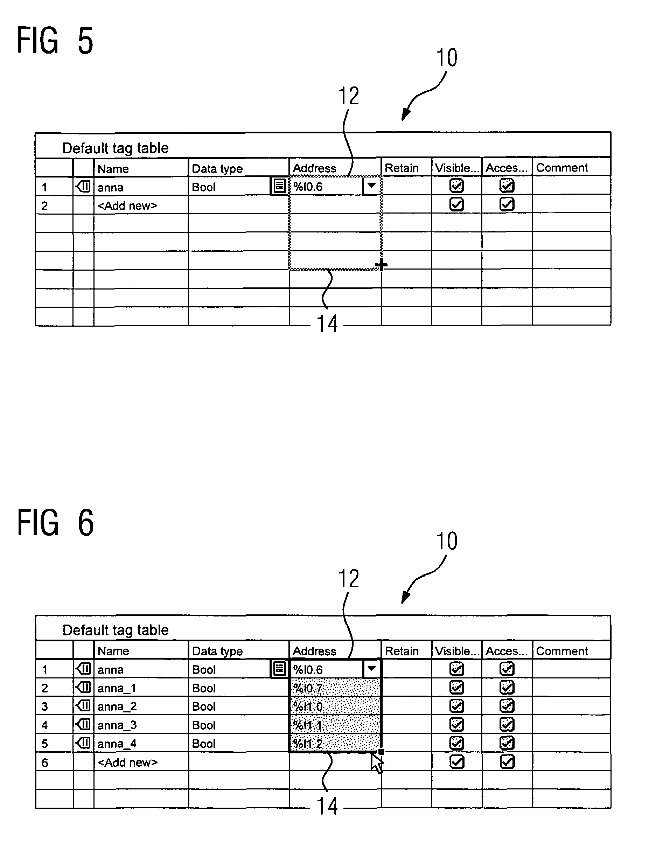

FIG 5 now is an exemplary situation for illustrating another aspect of the present invention. That is that the method for automatically filling a user-selected area 14 comprises the steps of identifying at least one source-object 12 in the relevant user-selected area 14, identifying at least one data-type associated in said matrix 10 with either a row or a column containing the source-object 12, identifying one auto-fill functionality for each thus-identified data-type, and applying said auto-fill functionality to each column or row of the user-selected area 14 depending on the source-object 12.

In the exemplary situation in FIG 5, the matrix 10 comprises one variable for use in an automation-system. This single variable is shown in the first row of the matrix 10. The columns of the matrix 10 are provided for various attributes for defining this variable and potentially other variables. The attributes shown in the exemplary situation are "Name", "Data type", "Address", etc. Each column therefore has associated with it a relevant data-type. Accordingly, for allowing storage of e.g. variable-names, the relevant matrix column has to be of an appropriate format, e.g. a format or data-type allowing storage of character strings. The same applies for the column shown as comprising the relevant variable-addresses, which requires that the relevant column is of a data-type allowing storage of data fit for representing a start-address of the variable in the memory of an automation device. When applying auto-fill to the user-selected area 14 in FIG 5, the method identifies the data-type for storing addresses as the data-type associated in the matrix 10 with the column containing the source-object 12. Based thereon, the method, in a subsequent step, identifies one auto-fill functionality for each thus-identified data-type. Here, the auto-fill functionality is the auto-fill functionality for automatically creating address-data. In another subsequent step the thus-identified auto-fill functionality is applied to the user-selected area 14. The auto-fill depends on the source-object 12 in that the addresses created during auto-fill start from the address comprised in the source-object 12.

FIG 6 shows the results of the auto-fill, when applied. However, FIG 6 not only shows the auto-fill functionality being applied to the user-selected area 14, but already shows further embodiments of the invention which e.g. allow for the auto-fill being extended to portions of the matrix outwith the user-selected area 14.

However, the explanation of FIG 6 will start with how the user-selected area 14 is automatically filled with addresses. The address-value in the source-object 12 is incremented for each cell of the user-selected area 14. However, the address-value is not only simply incremented by one, but rather incremented on account of data comprised in the matrix 10 and defining memory space requirements associated with data that is to be stored under the relevant new addresses. Here the data defining memory space requirements is the data in the column headlined "Data type" and the data there identifies the variable as being of the so-called Boolean type which requires one bit in the memory of an automation device ("on"/"off"; "0"/"1"). Therefore the increment by one applied when auto-filling the selected area stems from the data comprised in the matrix in the aforementioned column. Therefore auto-fill proposed here looks - depending on situation and format - outwith the selected area 14 for applying the relevant parameters, here the step-rate, to the auto-fill functionality. Also, the exemplary situation shown in FIG 6 illustrates that the auto-fill functionality observes syntax-restrictions defined for expressing an address as applicable for the relevant automation device. This is shown for the two-part address format, where the trailing digit can only have values between zero and seven. Therefore, the automatically created address-value "%0.7" is followed by a subsequent automatically created address-value "%1.0". That is an example for observing syntax-restrictions.

Now turning to the aspect mentioned above that the auto-fill is extended to portions of the matrix outwith the user-selected area 14, it has to be noted from FIG 5 that the matrix 10 initially had only data in its first row. The user-selected area 14, however, extended into empty rows. The auto-fill could, on the basis of the user-selected area 14, create subsequent addresses in the user-selected area 14 only. However, creating addresses or the like for rows (or columns) that do not yet define a variable, might be seen as partially useless. According to a specific aspect of the present invention the auto-fill functionality therefore not only creates data for automatically filling the user-selected area 14 but empty rows (or columns) too, as far as the dimension of the user-selected area 14 requires. FIG 6 shows the result of this extended auto-fill functionality in that data for four new rows is created (on account of the user-selected area 14 comprising four cells and the source-object 12). When looking at the first column in the matrix 10 one will note another specific aspect of a particular embodiment of the present invention, according to which, whenever it is ascertained that the data-type is a name, the auto-fill functionality for a name involves the steps of identifying a start-name from the source-object 12 (or a cell in the relevant column and the same row as the source-object 12 is in), applying an incremented or decremented suffix to said start-name for auto-filling the relevant column. The result is a consecutive set of unique variable-names. Applying a prefix instead of a suffix for creating unique variable-names is also possible.

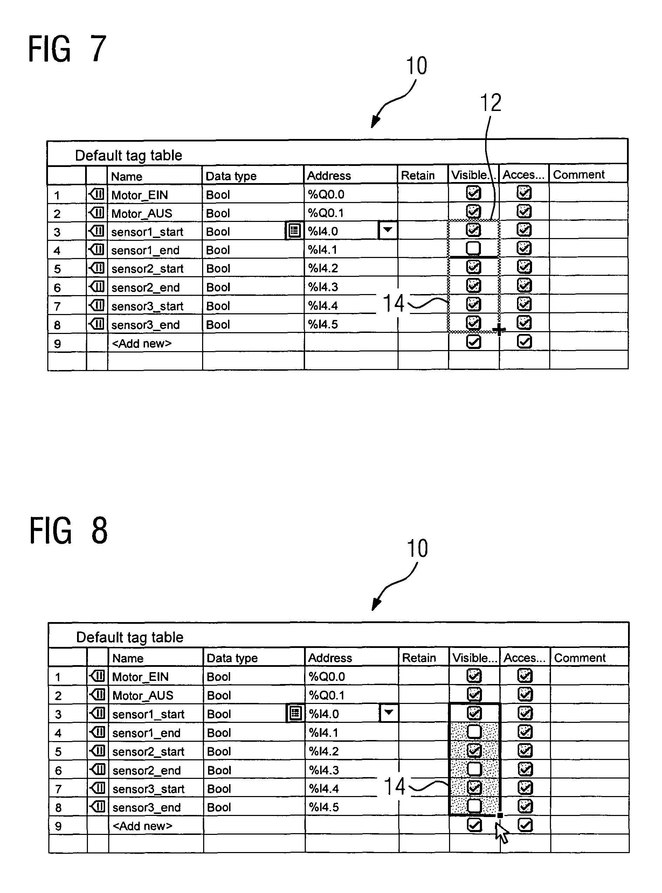

The description will continue with describing further specific embodiments of the proposed auto-fill functionality and features associated therewith. FIG 7 shows a matrix 10 with multiple variables each using one row. A column headlined "Visible" comprises checkboxes and the relevant column therefore is of the data-type allowing storage of the relevant data required for checkboxes as well as for the current status of the checkbox, i.e. marked or unmarked. FIG 8 shows the result when auto-fill is applied in that on the basis of the source-object 12 in FIG 7, comprising one checked and one unchecked box, the user-selected area 14 is filled with checked and unchecked boxes according to the underlying pattern in the source-object 12.

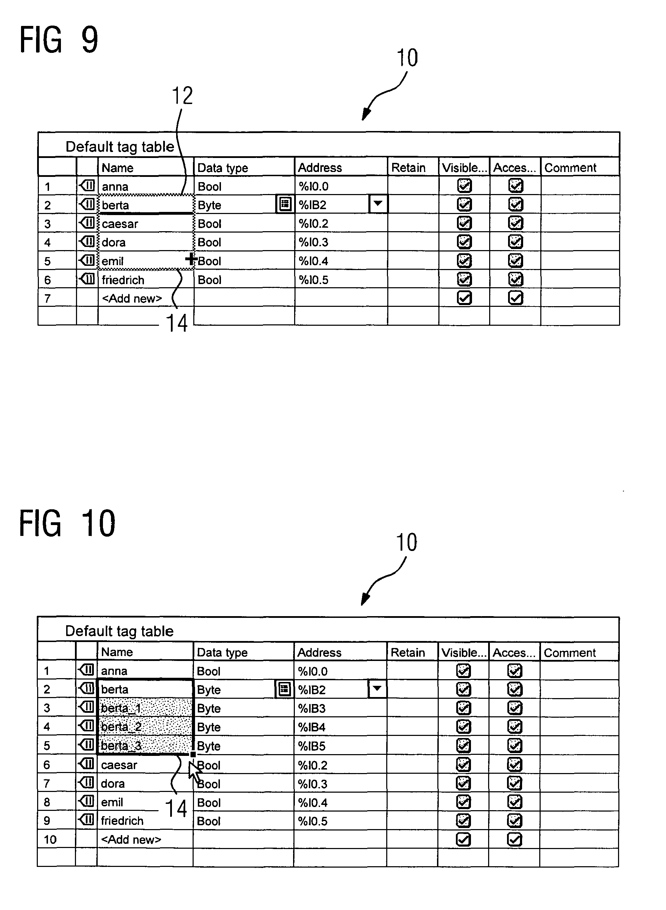

The situation shown in FIG 9 and FIG 10 illustrates that the auto-fill functionality must not always overwrite empty or non-empty cells but could also allow for new cells being inserted as required by the dimension of the user-selected area 14. Toggling between a first mode in which the auto-fill functionality overwrites empty or non-empty cells and a second mode in which the auto-fill functionality inserts new cells, that is e.g. new and empty rows, can be done by pressing a predefined key on the keyboard or by changing a relevant parameter of the engineering system comprising the auto-fill functionality. FIG 10 shows the result of the auto-fill, wherein necessary data like "Data Type", "Address", etc. are derived from the source object 12 or cells in the same row of the source-object 12, as described above.

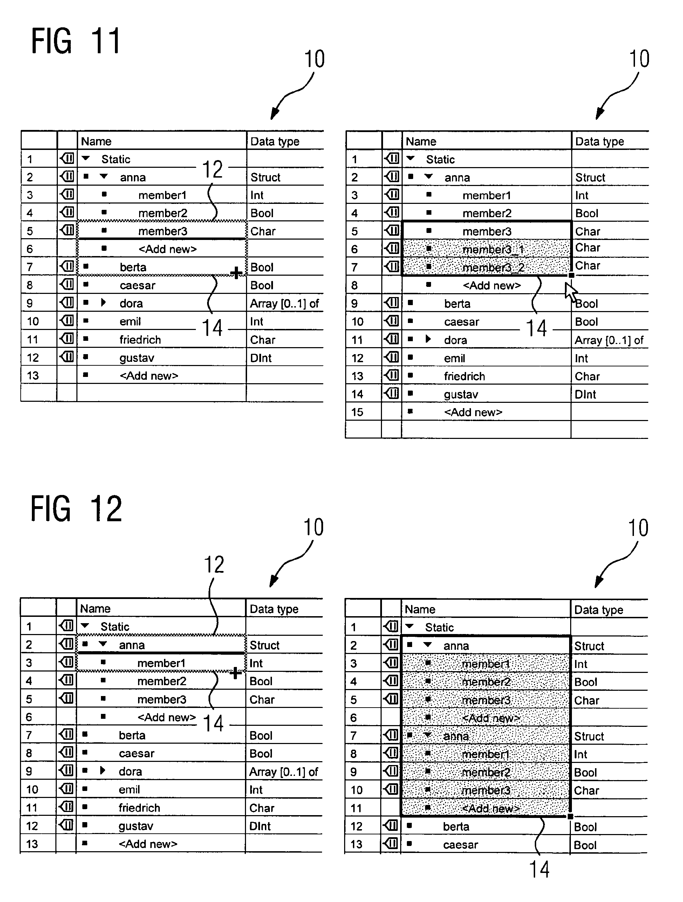

A situation where the auto-fill functionality with its feature not to overwrite data is particularly useful is shown in FIG 11. On the left-hand side FIG 11 shows that the user-selected area 14 comprises cells belonging to a structured variable (variable named "anna" in the first row) and a cell not belonging to this structure. Here, a specific embodiment of the present invention provides that whenever the user-selected area 14 comprises parts of a structured variable, the mode in which the auto-fill automatically inserts new cells is always activated. FIG 11 shows on the right-hand side the results of the auto-fill. The structured variable "anna" is kept and new members of the structure are inserted on the basis of the contents of the source-object 12.

FIG 12 shows another example of the context-sensitivity of the auto-fill functionality. The source-object 12 on the left-hand side encompasses the base-member of the structured variable named "anna". The result of the auto-fill is shown on the right-hand side in that the complete structure is duplicated into inserted empty cells, wherein only the name of the base-member of the structured variable is suffixed for creating unique variable names.

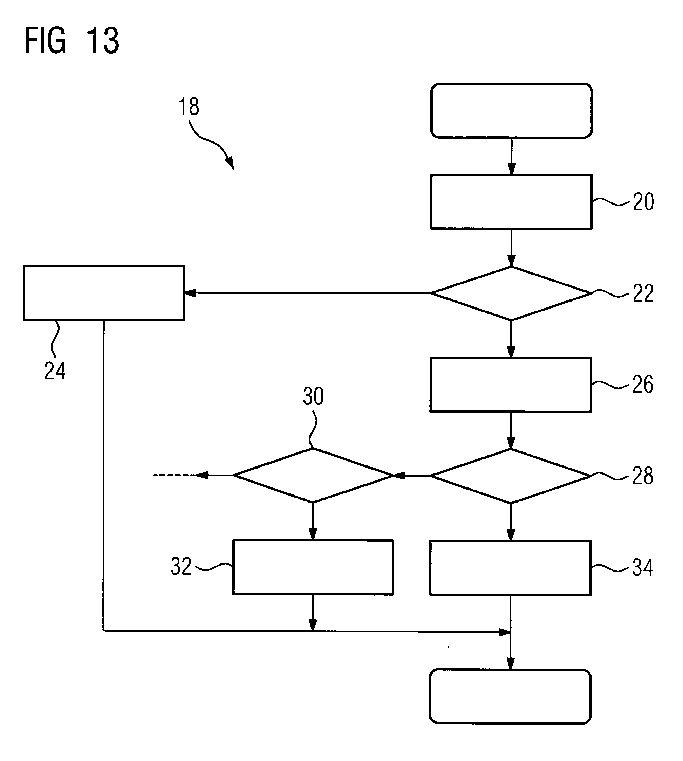

FIG 13 is a schematic flowchart of a computer-program 18 or a sub-routine in a computer-program for implementing the method according to the invention. Not shown in the flow-chart is functionality for maneuvering in a matrix 10 (FIG 5), editing a cell, selecting a source-object 12 (FIG 5) or defining a user-selected area 14 (FIG 5). The flow-chart starts with a first block 20 for identifying content comprised in the relevant source-object 12 or user-selected area 14 and analysing said identified content. Depending on the outcome of this analysis in a second block 22 either a third or a forth block 24, 26 is invoked for not displaying or displaying the visual indicator 16. The auto-fill algorithm only commences, when it is ascertained in the second block 22 that auto-fill is possible and the visual indicator 16 is displayed as a result of the execution of the forth block 26. Now a fifth, sixth or further function block 28, 30 identifies at least one data-type associated in the relevant matrix 10 with either a row or a column containing the source-object 12 and invokes a relevant subsequent function block 32, 34 for applying an auto-fill functionality to the user-selected area 14.

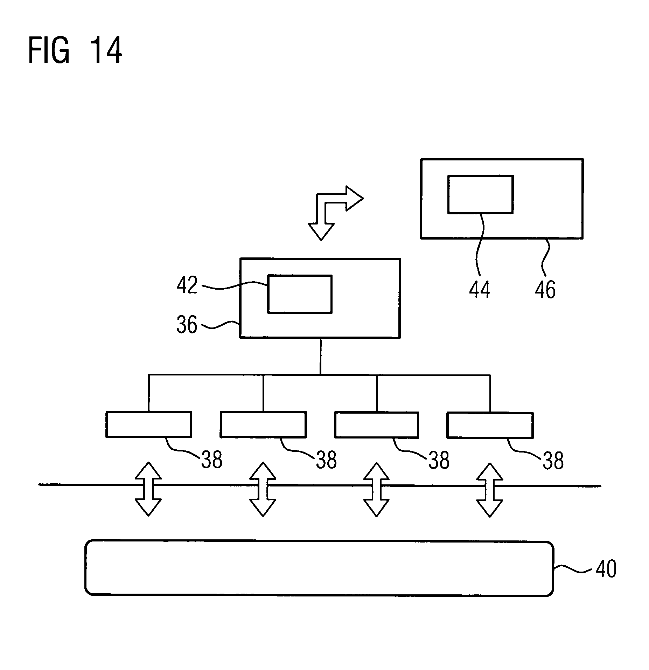

FIG 14 is a schematic block diagram illustrating a simplified automation device 36, e.g. a programmable logic controller (PLC) and multiple so-called field-devices 38, together controlling and/or observing a technical process 40. In operation the automation device(s) 36, 38 execute by means of e.g. a microprocessor (not shown) an automation program 42 stored in a memory (not shown) of the relevant automation device 36, 38. The scenario shown in FIG 14 is an example for an automation system as referred to herein. The automation program 42 is an example for automation software or automation functionality as referred to herein. The automation program 42 can be programmed, maintained, revised and debugged by means of an engineering system 44 stored e.g. in a memory (not shown) of a programming device 46. The engineering system 44 can be an engineering system 44 as known under the Trade Mark "Step" as referred to herein complemented with added functionality as described here and/or defined in the appended claims.

In addition to the embodiments of the aspects of the present invention described above, those of skill in the art will be able to arrive at a variety of other arrangements and steps which, if not explicitly described in this document, nevertheless embody the principles of the invention and fall within the scope of the appended claims.

## Claims

1. A method for automatically filling, in a matrix (10) comprising data concerned with automation functionality, a user-selected area (14) within said matrix (10) depending on data comprised within said user-selected area (14),
wherein said matrix (10) consists of at least one row and at least one column,
said method comprising the steps of:
identifying at least one source-object (12) in said user-selected area (14);
identifying at least one data-type associated in said matrix (10) with either a row or a column containing said source-object (12);
identifying one auto-fill functionality for each identified data-type; and
applying said auto-fill functionality to each column or row of said user-selected area (14)depending on said source-object (12).

2. A method for automatically filling, in a matrix (10) comprising data concerned with automation functionality, a user-selected area (14) within said matrix (10) depending on data comprised within said user-selected area (14),
said method comprising the steps of:
identifying content comprised in said user-selected area (14) ;
analysing said identified content; and
displaying a visual indicator (16), advising whether or not said user-selected area (14) allows an application of said auto-fill functionality.

3. A method according claim 1 or claim 2, wherein when in the step of identifying a data-type it is ascertained that the data-type is an address, the auto-fill functionality for an address involves the steps of:
identifying a start-address from said source-object (12);
incrementing or decrementing said start address on the basis of a pre-defined or pre-definable step-rate for auto-filling the relevant row or column respectively in said user-selected area (14), in which the start-address is located; and
observing syntax-restrictions defined for expressing an address as applicable for the relevant automation functionality.

4. A method according to claim 3, wherein said step-rate applied for incrementing or decrementing said start-address automatically accounts for data comprised in said matrix (10) and defining memory space requirements associated with data that is to be stored under the relevant addresses.

5. A method according to claim 4, wherein said data defining memory space requirements is data defining a data-type of a variable stored or to be stored under the relevant address.

6. A method according claim 1 or claim 2, wherein when in the step of identifying a data-type it is ascertained that the data-type is a name, the auto-fill functionality for a name involves the steps of:
identifying a start-name from said source-object; and
applying an incremented or decremented suffix or prefix to said start-name for auto-filling the relevant row or column respectively in said user-selected area (14), in which the start-name is located.

7. A method according to any one of the preceding claims, wherein, when said user-selected area (14) comprises empty columns or rows, the method for automatically filling said user-selected area further comprises the steps of:
identifying a data-type for data in said empty rows or columns respectively;
identifying a start-value for each of said empty rows or columns; and
extending the auto-filling to rows or columns outwith said user-selected area (14) on the basis of said identified data-type and said identified start-value.

8. Computer program (44) with a computer readable program code for implementing the method according to any one of claims 1 to 7 when the program code is run on a computer.

9. A Computer program product, such as a storage medium, with a computer readable program code (44) for implementing the method according to any one of claims 1 to 7 when the program code is run on a computer.
